# EUROPÄISCHE PATENTSCHRIFT

(11) **EP 1 714 052 B1**
(45) Veröffentlichungstag und Bekanntmachung des Hinweises auf die Patenterteilung: **20.04.2011**
(21) Anmeldenummer: 05700948.2
(22) Anmeldetag: 15.01.2005
(51) Int. Cl.: F16H 1/28

(54) **PLANETENRADGETRIEBE**
PLANETARY GEAR TRAIN
ENGRENAGE A ROUE PLANETAIRE

(30) Priorität: 11.02.2004 DE 102004006723
(43) Veröffentlichungstag der Anmeldung: 25.10.2006
(73) Patentinhaber: ZF Friedrichshafen AG, 88038 Friedrichshafen (DE)
(72) Erfinder: SCHULZ, Horst, 88045 Friedrichshafen (DE); KIRSCHNER, Tino, 88097 Eriskirch (DE)
(86) Internationale Anmeldenummer: PCT/EP2005/000358
(87) Internationale Veröffentlichungsnummer: WO 2005/080823

(56) Entgegenhaltungen:
- EP-A- 0 296 376
- EP-A- 1 188 002
- DE-A1- 19 525 831
- DE-A1- 19 720 255

## Beschreibung

Die Erfindung betrifft ein Planetenradgetriebe gemäß dem Oberbegriff des Patentanspruchs 1.

Allgemein bekannt ist das technische Problem, Planetenradgetriebe in spielarmer Ausführung mit üblichen Fertigungsmethoden kostengünstig herzustellen. Als Lösung wurde beispielsweise vorgeschlagen, eine Kombination von eingeschränkten Fertigungstoleranzen mit einer Klassifizierung von in mehrere Spielklassen eingeteilten Planeten, Hohlräder und Sonnenräder vorzusehen. Hierbei erfolgt die Spielmessung und Ermittlung der geeigneten Paarungsteile nach jedem Montagezwischenschritt. Solche Montageverfahren sind ab bestimmten Spielanforderungen infolge der Anzahl der vorzuhaltenden Paarungsteile, der Messkontrollen und der umständlichen Montage nicht mehr wirtschaftlich. Versuche, die Montage durch verminderte Messkontrollen dennoch wirtschaftlich zu gestalten, haben sich als nicht prozesssicher herausgestellt, da eine erhöhte Rückmontagequote von außerhalb der Toleranzen liegenden Planetenradgetrieben zu verzeichnen war.

Zudem ist aus der gattungsbildenden EP 1 188 002 B1 ein hochübersetzendes Wolfrom-Planetengetriebe mit einem Sonnenrad, zwei innenverzahnten Hohlrädern und doppelkonisch ausgebildeten Planetenrädern bekannt. Der Antrieb dieses Getriebes erfolgt über das Sonnenrad auf die Planetenräder, die mit den beiden Hohlrädern kämmen. Der Abtrieb erfolgt über eines der beiden Hohlräder, während das andere Hohlrad feststeht.

Vor diesem Hintergrund liegt der Erfindung die Aufgabe zugrunde, ein Planetenradgetriebe bereitzustellen, welches eine prozesssichere, kostengünstige und reproduzierbare Verzahnungsspieleinstellung in einfacher Art und Weise ermöglicht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Demnach geht die Erfindung aus von einem Planetenradgetriebe mit den Merkmalendes Anspruchs 1.

In vorteilhafter Weiterbildung der Erfindung ist vorgesehen, dass das Sonnenrad eine zumindest angenähert zylindrische Außenverzahnung aufweist. Zudem wird es als sehr sinnvoll eingeschätzt, wenn der Konuswinkel β der Zahnflanken der Planetenräder derart auf den Achsneigungswinkel α der Planetenradachsen abgestimmt ist, dass die Zahnflanken des Sonnenrads und die Zahnflanken der Planetenräder sich über die gesamte Zahnbreite berühren.

Dabei ist es in diesem Zusammenhang vorteilhaft, wenn der Achsneigungswinkel α der Planetenradachsen zumindest angenähert dem Konuswinkel β der Zahnflanken der Planetenräder entspricht. Gemäß einer anderen Ausgestaltungsform der Erfindung ist zudem vorgesehen, dass der Achsneigungswinkel α der Planetenradachsen zumindest angenähert der Hälfte des Konuswinkels der Zahnflanken des Hohlrades entspricht.

Eine weitere Variante sieht vor, dass der Planetenträger in dem Hohlrad drehbar gelagert ist. Dazu kann vorgesehen sein, dass zwei Lager beiderseits der Verzahnungsebene der Planetenräder angeordnet sind, die vorzugsweise zwischen dem Hohlrad und dem Planetenträger positioniert und als Schräglager in O-Anordnung ausgebildet sind.

Ein anderes Merkmal des erfindungsgemäß ausgebildeten Planetengetriebes besteht darin, dass der Planetenträger mit einer Abtriebswelle dieses Getriebes verbunden ist, während das Sonnenrad auf einer Antriebswelle eines Antriebsmotors befestigt ist.

Gemäß einer Variante kann in diesem Zusammenhang vorgesehen sein, dass die Einstellmittel zwischen dem Planetenradträger und dem Hohlrad wirksame, deren relative axiale Lage zueinander bestimmende Passscheiben und/oder Distanzscheiben umfassen.

Nach einer anderen Variante sind zwischen dem Planetenradträger und den Planetenrädern einstellwirksam angeordneten Einstellmittel als koaxial zu den Planetenradachsen angeordnete Distanzstücke ausgebildet. Diese Distanzstücke können dabei als koaxial zu den Planetenradachsen angeordnete Einstellfedern, beispielsweise als Schrauben- beziehungsweise Tellerfedern ausgebildet sein.

Entsprechend einer weiteren Variante kann vorgesehen sein, dass die zwischen dem Planetenradträger und den Planetenrädern wirksam angeordneten Einstellmittel als in den Planetenradträger eingesetzte, stufenlos zustellbare Gewindestifte ausgebildet sind, welche eine besonders feine Einstellung ermöglichen und zudem ohne jeglichen Demontageaufwand einstellbar sind.

Zur Beeinflussung des Verformungsverhaltens der Planetenräder und/oder des Hohlrads können diese einen Einstich aufweisen, wobei der in den Planetenrädern ausgebildete Einstich rotationssymmetrisch umlaufend ausgebildet ist. Es kann aber auch von Vorteil sein, wenn mehrere umfangsbeabstandete Einstiche in den Planetenrädern angeordnet sind.

Durch diese Maßnahme kann das elastische Verformungsverhalten gezielt beeinflusst werden. So kann beispielsweise erreicht werden, dass sich der mittlere Achsabstand der Planetenradachsen untereinander geringfügig vergrößert, so dass bei axialer Zustellung der Planetenräder zunächst der Zahnkontakt zwischen Hohlradinnenverzahnung und Planetenradaußenverzahnung eingestellt ist, während sich dann durch weiteres axiales Zustellen ohne Einengung dieses Zahnkontaktes der weitere Zahneingriff zwischen den Planeten und dem Sonnenrad einstellt.

In weiterer vorteilhafter Ausgestaltung kann für erhöhte Spielanforderungen vorgesehen sein, dass zusätzliche Einstellmittel angeordnet sind, welche die relative axiale Position von Hohlrad und Planetenradträger zueinander bestimmen. Dieses kann z. B. in vorteilhaft einfacher Weise durch in ihren Dimensionen geeignet gewählte Passscheiben erfolgen, welche in einen Einstich des Planetenradträgers eingelegt sind. Die Spieleinstellung des Getriebes erfolgt dann zweistufig.

Vorzugsweise als erster Schritt wird mit den eingangs genannten, zwischen Planeten und Träger wirksamen Einstellmitteln das Spiel zwischen Planeten und Sonne eingestellt, während im zweiten Schritt das Spiel zwischen Hohlrad und Planeten eingestellt wird. Hierdurch kann eine separate, exakte Spieleinstellung der beiden Zahneingriffe erfolgen.

Die bevorzugt zylindrische Sonnenradverzahnung ist im Betriebszustand ungehindert axial verschiebbar, so dass sie mit einer antreibenden Motorwelle, die typischerweise im Betrieb thermischen Längenänderungen und sonstigen antriebsbedingten Axialbewegungen unterliegt, direkt und ohne axiale Stützlager oder Ausgleichsmittel verbunden werden kann. Alle spielmaßgeblichen Bauteile lassen sich dabei mit üblichen, prozesssicheren und kostengerechten Fertigungstoleranzen herstellen.

Auch bei der zweistufigen Spieleinstellung können die Materialfreistellungen vorteilhaft eingesetzt werden, da somit periodische fertigungstypische Fehler der beteiligten Bauteile deutlich seltener zu Klemmerscheinungen oder sonstigen Schäden führen.

In weiterer vorteilhafter Ausgestaltung kann insbesondere bei Getrieben mit einer erhöhten Anzahl von Planeten vorgesehen sein, dass ein einziges, zwischen Planeten und Träger wirksames Einstellmittel auf alle Planeten gemeinsam einwirkt.

Schließlich ist vorgesehen, dass das Übersetzungsverhältnis des Getriebes einen Wert hat, der kleiner oder gleich zwölf ist.

Vorteilhafter Weise ist es durch die Erfindung möglich, auf die eingangs genannte aufwändige Paarung von klassifizierten Getriebebauteilen zu verzichten. Nach der Montage des Getriebes wird das Zahnflankenspiel ohne Einstellmittel bestimmt und anschließend über geeignete Wahl der Dicke von z. B. den genannten Anlaufscheiben das gewünschte Spiel eingestellt. Dabei führt die geneigte Planetenradachsenanordnung dazu, dass mit wachsender Dicke das Planetenrad auf seiner Achse das Zahnflankenspiel verkleinernd verschoben wird.

Weitere Merkmale und Vorteile der Erfindung ergeben sich aus dem nachfolgend anhand einer Zeichnung näher erläuterten Ausführungsbeispiel. In dieser zeigt
- Fig. 1: eine erste Ausführungsform eines erfindungsgemäß ausgebilde- ten Planetengetriebes,
- Fig. 2: eine Einzelheit X gemäss Figur 1 einer zweiten Ausführungsform, und
- Fig. 3: einen Ausschnitt ähnlich Figur 2 einer dritten Ausführungsform.

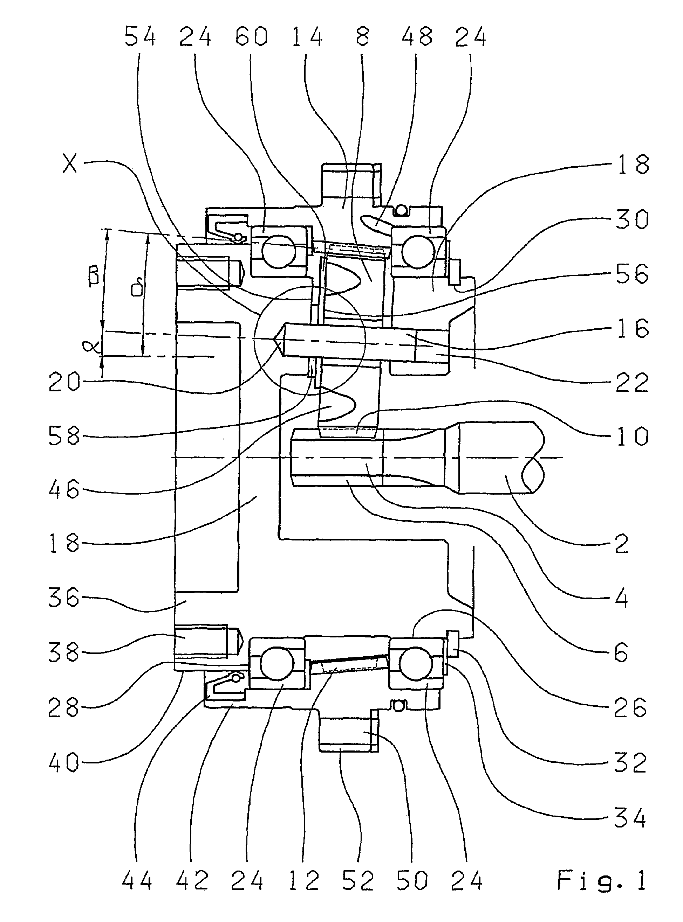

Ein erfindungsgemäß ausgebildetes Planetenradgetriebe ist gemäss Fig. 1 wie folgt aufgebaut. Eine Welle 2 trägt ein Sonnenrad 4 mit einer Außenverzahnung 6. In diese Außenverzahnung 6 greifen mehrere Planetenräder ein, von denen nur ein Planetenrad 8 in der Zeichnungsebene liegend gezeigt ist. Eine Außenverzahnung 10 des Planetenrades 8 kämmt sowohl mit der Außenverzahnung 6 des Sonnenrades 4 wie auch mit der Innenverzahnung 12 eines Hohlrades 14.

Das Planetenrad 8 ist auf einer Planetenradachse 16 drehbar gelagert, welche drehfest in einen Planetenradträger 18 eingesetzt ist. Dabei greift die Planetenradachse 16 mit ihrem gemäss Fig. 1 links liegenden Ende klemmend in ein Sackloch 20 des Planetenradträgers 18 ein, während sich das entsprechend rechts liegende Ende in einer Durchgangsöffnung 22 abstützt.

Das Hohlrad 14 stützt sich unter Zwischenschaltung von schräg angestellten Kugellagern 24 auf einer Schulter 26 des Planetenradträgers 18 ab. Axial ist das Hohlrad 14 gegenüber dem Planetenradträger 18 mittels Anlage des gemäss Fig. 1 links liegenden Kugellagers 24 an einem Axialbund 28 und einer in einem Einstich 30 des Planetenradträgers 18 eingesetzten Passscheibe 32 gesichert, welche ihrerseits unter Zwischenschaltung einer Scheibe 34 am rechts liegend gezeigten Kugellager 24 unmittelbar angrenzt.

Der Planetenradträger 18 trägt einen Flansch 36, in den umfangsverteilte Gewindebohrungen 38 eingebracht sind. Zwischen einer Außenumfangsfläche 40 des Flansches 36 und einem Hülsenbund 42 des Hohlrades 14 ist ein Radialwellendichtring 44 dichtwirksam angeordnet.

Außerdem sind in dem Planetenrad 8 und dem Hohlrad 14 Materialfreistellungen in Form von Einstichen 46, 48 eingebracht. Die dem Planetenrad 8 zugeordneten Materialfreistellungen sind hier als ein rotationssymmetrisch umlaufender Einstich 46 ausgebildet, sie können jedoch auch als mehrere umfangsbeabstandete Einstiche 46 angeordnet sein.

Die dem Hohlrad 14 zugeordnete Materialfreistellung ist als rotationssymmetrisch von dem rechts liegend gezeigten Kugellager 24 ausgehend in Außenrichtung geneigt verlaufender Einstich 48 ausgebildet. Das Hohlrad 14 trägt auf seiner Außenseite einen durchgehende Öffnungen 50 aufweisenden Ringflansch 52.

Des weiteren ist die Außenverzahnung 6 des Sonnenrades 4 zylindrisch zur Welle 2 ausgebildet. Die Planetenradachsen 16 sind unter einem Achsneigungswinkel **α** zur Welle 2 geneigt, und die Außenverzahnung 10 der Planetenräder 8 ist konisch ausgebildet sowie unter einem Konuswinkel β zur Planetenradachse 16 geneigt angeordnet. In Addition der Winkel α und β ist der Gesamtkonuswinkel δ der Innenverzahnung 12 zur Welle 2 vergleichsweise groß. Der Konuswinkel β ist dabei derartig auf den Achsneigungswinkel α der Planetenradachsen 16 abgestimmt, dass sich die Zahnflanken von Sonnenrad 4 und Planetenrad 8 über deren gesamte Zahnbreite berühren.

Zwischen einer dem Planetenrad 8 zugewandten Innenfläche 54 des Planetenträgers 18 und einer dieser zugewandten Stirnfläche 56 des Planetenrades 8 ist ein als scheibenartiges Distanzstück 58 ausgebildetes Einstellmittel für die Verzahnungsspieleinstellung des Planetenrades 8 angeordnet, wobei das Distanzstück 58 planetenradseitig an einem angeformten Bund 60 zur Anlage kommt.

Bei relativ kleinen bis mittleren Anforderungen an das zwischen den Zahnradpaarungen Außenverzahnung 6 / Außenverzahnung 10 und Innverzahnung 12 / Außenverzahnung 10 herrschenden Zahnflankenspieles kann das Gesamt-Getriebespiel wie folgt eingestellt werden.

In Abhängigkeit vom gewünschten Spiel werden Distanzstücke 58, z. B. Anlaufscheiben mit unterschiedlichem Dickenmaß eingesetzt. Diese können ringförmig ausgebildet koaxial zur Planetenradachse 16 angeordnet oder als geschlitzter Ring ausgebildet sein, welcher mittels des nicht gezeigten Schlitzes über die Planetenradachse 16 geschoben wird.

Die axiale Verschiebbarkeit des Planetenrades 8 gegenüber der Planetenradachse 16 bewirkt, dass sich in Abhängigkeit von der Dicke der Anlaufscheibe die Zahnspiele in den beiden vorstehend beschriebenen Zahnradeingriffen etwa in gleicher Weise ändern. Beide Eingriffe lassen sich somit mit einem Einstellmittel ändern.

Die Einstiche 46 und 48 verbessern das elastische Verhalten des Planetenradgetriebes. Form und Querschnittsfläche dieser Einstiche 46, 48 sind derart bemessen, dass sich gezielt für beide Zahnradeingriffe die gewünschten Spiele einstellen. Der Einstich 46 ist dabei so bemessen, dass sich der mittlere Achsabstand zwischen den Planetenradachsen 16 gegenüber einem unbelasteten Zustand leicht vergrößert. Hierdurch wird bei axialer Zustellung des Planetenrades 8 der Zahnkontakt zwischen Innenverzahnung 12 und Außenverzahnung 10 etwas früher erreicht als in der Eingriffspaarung zwischen Planetenrad 8 und Sonnenrad 4. Bei weiterer axialer Zustellung des Planetenrades 8 wird unter kalkulierter elastischer Verformung der beteiligten Bauteile im elastischen axialen Zusatzweg auch der gewünschte enge Zahnkontakt zwischen Planetenrad 8 und Sonnenrad 4 erreicht.

Bei erhöhten Anforderungen an das Gesamt-Getriebespiel sind getrennte Einstellmittel für die beiden Zahneingriffe vorgesehen. Die Zahnflankenspieleinstellung zwischen dem Sonnenrad 4 und dem Planetenrad 8 erfolgt in der zuvor beschriebenen Weise mittels dem Distanzstück 58.

Das Zahnflankenspiel zwischen Planetenrad 8 und Hohlrad 14 erfolgt durch Einstellung der relativen axialen Lage des Hohlrades 14 zum Planetenradträger 18. Zu diesem Zweck werden mit dem gewünschten Zahnflankenspiel korrespondierend dimensionierte Passscheiben 32 und/oder Scheiben 34 verwendet.

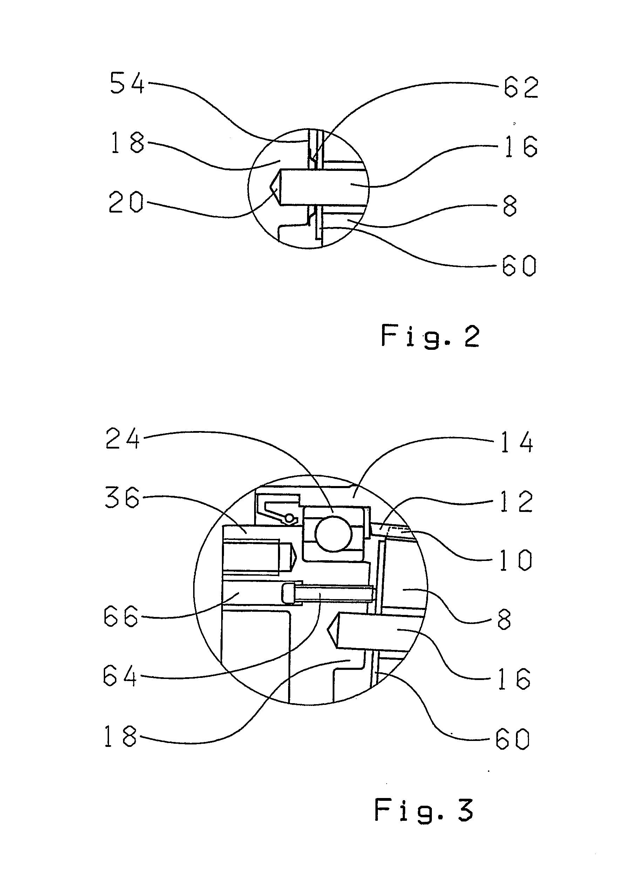

Fig. 2 zeit in einer Einzelheit X gemäss Fig. 1 eine zweite Ausführungsform der Einstellmittel. Zwischen dem Bund 60 und der Innenfläche 54 ist hier eine tellertederartige Einstellfeder 62 wirksam. Die Federrate ist dabei so gewählt, dass eine für das gewünschte Zahnflankenspiel ausreichende Druckkraft auf das Planetenrad 8 wirkt. Ansonsten sind mit dieser Ausführungsform die gleichen im Zusammenhang mit Fig. 1 beschrieben Maßnahmen durchführbar und Effekte erzielbar.

Fig. 3 zeigt eine dritte Ausführungsform der Einstellmittel in Form eines stufenlos zustellbaren Gewindestiftes 64. Dieser wird über eine in den Flansch 36 eingebrachte Bohrung 66 in ein entsprechendes Gewinde eingesetzt. Durch Eindrehen des Gewindestiftes 64 gelangt dieser in Kontakt mit dem Bund 60 des Planetenrades 8 und verschiebt dieses in der bereits zuvor beschriebenen Weise axial. Auch diese Ausführungsform ermöglicht das Einstellen der beiden Zahnradpaarungen gemeinsam oder getrennt in Verbindung mit der Passscheibe 32 wie zuvor im Zusammenhang mit Fig. 1 beschrieben.

Unabhängig von der Art der Einstellmittel erfolgt der Antrieb des Planetenradgetriebes über die Welle 2; somit überträgt das Sonnenrad 4 die eingebrachte Leistung auf die Planetenräder 8. Die Welle 2 ist zu diesem Zweck beispielsweise mit einem nicht gezeigten Elektromotor in Eingriff bringbar.

Das Hohlrad 14 ist in nicht näher gezeigter Weise mittels die Öffnungen 50 durchsetzenden Befestigungsmitteln ortsfest gehalten. Hierdurch läuft der Planetenradträger 18 als Abtrieb um, wobei an den Gewindebohrungen 38 die Antriebswelle einer nicht gezeigten Maschine angeordnet ist.

Bei Zweckmäßigkeit wird alternativ der Planetenradträger 18 mittels der Gewindebohrungen 38 ortsfest gesetzt. Das dann als Abtrieb wirkende Hohlrad 14 treibt entsprechend eine Maschine an.

### Bezugszeichen

- 2: Welle
- 4: Sonnenrad
- 6: Außenverzahnung
- 8: Planetenrad
- 10: Außenverzahnung
- 12: Innenverzahnung
- 14: Hohlrad
- 16: Planetenradachse
- 18: Planetenradträger
- 20: Sackloch
- 22: Durchgangsöffnung
- 24: Kugellager
- 26: Schulter
- 28: Axialbund
- 30: Einstich
- 32: Passscheibe
- 34: Scheibe
- 36: Flansch
- 38: Gewindebohrung
- 40: Außenumfangsfläche
- 42: Hülsenbund
- 44: Radialwellendichtring
- 46: Einstich
- 48: Einstich
- 50: Öffnung
- 52: Ringflansch
- 54: Innenfläche
- 56: Stirnfläche
- 58: Distanzstück
- 60: Bund
- 62: Einstellfeder
- 64: Gewindestift
- 66: Bohrung
- α: Achsneigungswinkel
- β: Konuswinkel
- δ: Gesamtkonuswinkel

## Patentansprüche

1. Planetenradgetriebe mit an einem Planetenträger (18) drehwirksam gelagerten, konischen Planetenrädern (8), die im Zahneingriff mit einem innenverzahnten, konischen Hohlrad (14) und einem Sonnenrad (4) stehen, wobei die Planetenradachsen (16) unter einem Achsneigungswinkel (α) im Planetenradträger (18) gehalten sind und die Position der Planetenräder (8) im Planetengetriebe durch Einstellmittel für eine Verzahnungsspieleinstellung einstellbar ist, **dadurch gekennzeichnet, dass** die Planetenräder (8) auf den ihnen zugeordneten Planetenradachsen (16) axial verschiebbar angeordnet sind, und dass die Einstellmittel zwischen dem Planetenradträger (18) und den Planetenrädern (8) wirksam angeordnet sind.

2. Planetenradgetriebe nach Anspruch 1, **dadurch gekennzeichnet, dass** das Sonnenrad (4) eine zumindest angenähert zylindrische Außenverzahnung (6) aufweist.

3. Planetenradgetriebe nach Anspruch 1 oder 2, **dadurch gekennzeichnet, dass** der Konuswinkel (β) der Zahnflanken der Planetenräder (8) derart auf den Achsneigungswinkel (α) der Planetenradachsen (16) abgestimmt ist, dass die Zahnflanken des Sonnenrads (4) und die Zahnflanken der Planetenräder (8) sich über die gesamte Zahnbreite berühren.

4. Planetenradgetriebe nach Anspruch 3, **dadurch gekennzeichnet, dass** der Achsneigungswinkel (α) der Planetenradachsen (16) zumindest angenähert dem Konuswinkel (β) der Zahnflanken der Planetenräder (8) entspricht.

5. Planetenradgetriebe nach Anspruch 3, **dadurch gekennzeichnet, dass** der Achsneigungswinkel (α) der Planetenradachsen (16) zumindest angenähert der Hälfte des Konuswinkels der Zahnflanken des Hohlrades (14) entspricht.

6. Planetenradgetriebe nach einem der vorherigen Ansprüche, **dadurch gekennzeichnet, dass** der Planetenträger (18) in dem Hohlrad (14) drehbar gelagert ist.

7. Planetenradgetriebe nach Anspruch 6, **dadurch gekennzeichnet, dass** zwei Lager (24) beiderseits der Verzahnungsebene der Planetenräder (8) vorgesehen sind.

8. Planetenradgetriebe nach Anspruch 6 oder 7, **dadurch gekennzeichnet, dass** die Lager (24) zwischen dem Hohlrad (14) und dem Planetenträger (18) als Schräglager (24) in O-Anordnung ausgebildet sind.

9. Planetenradgetriebe nach einem der vorherigen Ansprüche, **dadurch gekennzeichnet, dass** der Planetenträger (18) mit einer Abtriebswelle des Getriebes verbunden ist.

10. Planetenradgetriebe nach einem der vorherigen Ansprüche, **dadurch gekennzeichnet, dass** das Sonnenrad (4) auf einer Antriebswelle (2) eines Antriebsmotors befestigt ist.

11. Planetenradgetriebe nach einem der vorherigen Ansprüche, **dadurch gekennzeichnet, dass** die Einstellmittel zwischen Planetenradträger (18) und Hohlrad (14) wirksame, deren relative axiale Lage zueinander bestimmende Passscheiben (32) und/oder Distanzscheiben (34) umfassen.

12. Planetenradgetriebe nach einem der vorherigen Ansprüche, **dadurch gekennzeichnet, dass** die zwischen Planetenradträger (18) und Planetenrädern (8) wirksam angeordneten Einstellmittel als koaxial zu den Planetenradachsen (16) angeordnete Distanzstücke (58) ausgebildet sind.

13. Planetenradgetriebe nach einem der vorherigen Ansprüche, **dadurch gekennzeichnet, dass** die zwischen Planetenradträger (18) und Planetenrädern (8) wirksam angeordneten Einstellmittel als koaxial zu den Planetenradachsen (16) angeordnete Einstellfedern (62) ausgebildet sind.

14. Planetenradgetriebe nach einem der vorherigen Ansprüche, **dadurch gekennzeichnet, dass** die zwischen Planetenradträger (18) und Planetenrädern (8) wirksam angeordneten Einstellmittel als in den Planetenradträger (18) eingesetzte, stufenlos zustellbare Gewindestifte (64) ausgebildet sind.

15. Planetenradgetriebe nach einem der vorherigen Ansprüche, **dadurch gekennzeichnet, dass** die Planetenräder (8) und/oder das Hohlrad (14) einen Einstich (46,48) aufweisen.

16. Planetenradgetriebe nach Anspruch 15, **dadurch gekennzeichnet, dass** der in den Planetenrädern (8) ausgebildete Einstich (46) rotationssymmetrisch umlaufend ausgebildet ist.

17. Planetenradgetriebe nach Anspruch 15, **dadurch gekennzeichnet, dass** mehrere umfangsbeabstandete Einstiche (46) in den Planetenrädern (8) angeordnet sind.

18. Planetenradgetriebe nach einem der vorherigen Ansprüche, **dadurch gekennzeichnet, dass** das Übersetzungsverhältnis des Getriebes einen Wert hat, der kleiner oder gleich zwölf ist.

## Claims

1. Planetary gear set having conical planet gears (8) which are rotatably mounted on a planet carrier (18) and which are in meshing engagement with an internally toothed conical internal gear (14) and a sun gear (4), the planet gear axles (16) being held at an axle angle of inclination (α) in the planet gear carrier (18), and the position of the planet gears (8) in the planetary gear set being adjustable by adjusting means for the purpose of toothing play adjustment, **characterized in that** the planet gears (8) are arranged in an axially movable manner on their associated planet gear axles (16), and **in that** the adjusting means are arranged so as to act between the planet gear carrier (18) and the planet gears (8).

2. Planetary gear set according to Claim 1, **characterized in that** the sun gear (4) has an at least approximately cylindrical external toothing (6).

3. Planetary gear set according to Claim 1 or 2, **characterized in that** the cone angle (β) of the tooth flanks of the planet gears (8) is coordinated with the axle angle of inclination (α) of the planet gear axles (16) in such a way that the tooth flanks of the sun gear (4) and the tooth flanks of the planet gears (8) make contact over the entire tooth width.

4. Planetary gear set according to Claim 3, **characterized in that** the axle angle of inclination (α) of the planet gear axles (16) at least approximately corresponds to the cone angle (β) of the tooth flanks of the planet gears (8).

5. Planetary gear set according to Claim 3, **characterized in that** the axle angle of inclination (α) of the planet gear axles (16) is at least approximately half of the cone angle of the tooth flanks of the internal gear (14).

6. Planetary gear set according to one of the preceding claims, **characterized in that** the planet gear carrier (18) is rotatably mounted in the internal gear (14).

7. Planetary gear set according to Claim 6, **characterized in that** two bearings (24) are provided, one on either side of the toothing plane of the planet gears (8).

8. Planetary gear set according to Claim 6 or 7, **characterized in that** the bearings (24) are designed as angular contact bearings (24) in an O-shaped arrangement between the internal gear (14) and the planet carrier (18).

9. Planetary gear set according to one of the preceding claims, **characterized in that** the planet carrier (18) is connected to an output shaft of the gear set.

10. Planetary gear set according to one of the preceding claims, **characterized in that** the sun gear (4) is fastened on a drive shaft (2) of a drive motor.

11. Planetary gear set according to one of the preceding claims, **characterized in that** the adjusting means comprise shim rings (32) and/or spacer discs (34) which act between the planet gear carrier (18) and internal gear (14) and which determine the relative axial position of these to one another.

12. Planetary gear set according to one of the preceding claims, **characterized in that** the adjusting means which are arranged so as to act between the planet gear carrier (18) and planet gears (8) are designed as spacer pieces (58) arranged coaxially with respect to the planet gear axles (16).

13. Planetary gear set according to one of the preceding claims, **characterized in that** the adjusting means which are arranged so as to act between the planet gear carrier (18) and planet gears (8) are designed as adjusting springs (62) arranged coaxially with respect to the planet gear axles (16).

14. Planetary gear set according to one of the preceding claims, **characterized in that** the adjusting means which are arranged so as to act between the planet gear carrier (18) and planet gears (8) are designed as threaded pins (64) which are inserted into the planet gear carrier (18) and which can be advanced in a continuously variable manner.

15. Planetary gear set according to one of the preceding claims, **characterized in that** the planet gears (8) and/or the internal gear (14) have a recess (46, 48).

16. Planetary gear set according to Claim 15, **characterized in that** the recess (46) formed in the planet gears (8) is formed in a rotationally symmetrically encircling manner.

17. Planetary gear set according to Claim 15, **characterized in that** a plurality of circumferentially spaced-apart recesses (46) are arranged in the planet gears (8).

18. Planetary gear set according to one of the preceding claims, **characterized in that** the transmission ratio of the gear set has a value of less than or equal to twelve.

## Revendications

1. Engrenage à pignons planétaires comprenant des pignons planétaires coniques (8) montés à rotation sur un porte-satellites (18), lesquels sont en engagement d'engrènement avec une couronne conique (14) à denture intérieure et une roue solaire (4), les axes des pignons planétaires (16) étant maintenus dans le porte-satellites (18) suivant un angle d'inclinaison par rapport à l'axe (α) et la position des pignons planétaires (8) dans l'engrenage planétaire pouvant être ajustée par des moyens d'ajustement pour un ajustement du jeu d'engrènement, **caractérisé en ce que** les pignons planétaires (8) sont disposés de manière déplaçable axialement sur les axes de pignons planétaires (16) qui leur sont associés et **en ce que** les moyens d'ajustement sont disposés de manière active entre le porte-satellites (18) et les pignons planétaires (8).

2. Engrenage à pignons planétaires selon la revendication 1, **caractérisé en ce que** la roue solaire (4) présente une denture extérieure (6) au moins approximativement cylindrique.

3. Engrenage à pignons planétaires selon la revendication 1 ou 2, **caractérisé en ce que** l'angle de conicité (β) des flancs des dents des pignons planétaires (8) est adapté à l'angle d'inclinaison par rapport à l'axe (α) des axes des pignons planétaires (16), de telle sorte que les flancs des dents de la roue solaire (4) et les flancs des dents des pignons planétaires (8) viennent en contact sur toute la largeur des dents.

4. Engrenage à pignons planétaires selon la revendication 3, **caractérisé en ce que** l'angle d'inclinaison par rapport à l'axe (α) des axes des pignons planétaires (16) correspond au moins approximativement à l'angle de conicité (β) des flancs des dents des pignons planétaires (8).

5. Engrenage à pignons planétaires selon la revendication 3, **caractérisé en ce que** l'angle d'inclinaison par rapport à l'axe (α) des axes des pignons planétaires (16) correspond au moins approximativement à la moitié de l'angle de conicité des flancs des dents de la couronne (14).

6. Engrenage à pignons planétaires selon l'une quelconque des revendications précédentes, **caractérisé en ce que** le porte-satellites (18) est monté à rotation dans la couronne (14).

7. Engrenage à pignons planétaires selon la revendication 6, **caractérisé en ce que** deux paliers (24) sont prévus de chaque côté du plan d'engrènement des pignons planétaires (8).

8. Engrenage à pignons planétaires selon la revendication 6 ou 7, **caractérisé en ce que** les paliers (24) sont réalisés entre la couronne (14) et le porte-satellites (18) sous forme de paliers obliques (24) dans un agencement en forme de **O.**

9. Engrenage à pignons planétaires selon l'une quelconque des revendications précédentes, **caractérisé en ce que** le porte-satellites (18) est connecté à un arbre de sortie de la transmission.

10. Engrenage à pignons planétaires selon l'une quelconque des revendications précédentes, **caractérisé en ce que** la roue solaire (4) est fixée sur un arbre d'entraînement (2) d'un moteur d'entraînement.

11. Engrenage à pignons planétaires selon l'une quelconque des revendications précédentes, **caractérisé en ce que** les moyens d'ajustement entre le porte-satellites (18) et la couronne (14) comprennent des disques d'ajustement (32) et/ou des disques d'espacement (34) actifs, déterminant leur position axiale relative les uns par rapport aux autres.

12. Engrenage à pignons planétaires selon l'une quelconque des revendications précédentes, **caractérisé en ce que** les moyens d'ajustement disposés de manière active entre le porte-satellites (18) et les pignons planétaires (8) sont réalisés sous forme de pièces d'espacement (58) disposées coaxialement par rapport aux axes des pignons planétaires (16).

13. Engrenage à pignons planétaires selon l'une quelconque des revendications précédentes, **caractérisé en ce que** les moyens d'ajustement disposés de manière active entre le porte-satellites (18) et les pignons planétaires (8) sont réalisés sous forme de ressorts d'ajustement (62) disposés coaxialement par rapport aux axes des pignons planétaires (16).

14. Engrenage à pignons planétaires selon l'une quelconque des revendications précédentes, **caractérisé en ce que** les moyens d'ajustement disposés de manière active entre le porte-satellites (18) et les pignons planétaires (8) sont réalisés sous forme de broches filetées (64) insérées dans le porte-satellites (18) et pouvant être avancées en continu.

15. Engrenage à pignons planétaires selon l'une quelconque des revendications précédentes, **caractérisé en ce que** les pignons planétaires (8) et/ou la couronne (14) présentent une encoche (46, 48).

16. Engrenage à pignons planétaires selon la revendication 15, **caractérisé en ce que** l'encoche (46) réalisée dans les pignons planétaires (8) est réalisée sur la périphérie avec une symétrie de révolution.

17. Engrenage à pignons planétaires selon la revendication 15, **caractérisé en ce que** plusieurs encoches (46) espacées sur la périphérie sont disposées dans les pignons planétaires (8).

18. Engrenage à pignons planétaires selon l'une quelconque des revendications précédentes, **caractérisé en ce que** le rapport de démultiplication de la transmission a une valeur inférieure ou égale à douze.
